# EUROPEAN PATENT SPECIFICATION

(11) **EP 0 468 631 B1**
(45) Date of publication and mention of the grant of the patent: **27.08.1997**
(21) Application number: 91305299.9
(22) Date of filing: 12.06.1991
(51) Int. Cl.: H04M 19/06, H04M 19/08

(54) **Power system for telephone systems with street cabinets connected to terminals and to an exchange**
Speisungssystem für Fernmeldesysteme enthalten in Strassenvorrichtungen, die Endgeräte mit einer Vermittlungsanlage verbinden
Système d'alimentation pour systèmes téléphoniques avec équipements de rue connectés aux terminaux et à un central

(30) Priority: 25.07.1990 GB 9016362
(43) Date of publication of application: 29.01.1992
(73) Proprietor: GPT LIMITED, Coventry, CV3 1HJ (GB)
(72) Inventor: Walker, David, Stafford, Staffordshire ST16 1LA (GB)
(74) Representative: Burrington, Alan

(56) References cited:
- BE-A- 717 489
- INTELEC '85 - CONFERENCE PROCEEDINGS October 1985, MUNICH - GERMANY pages 527 - 531; J. ESSER ET AL.: 'Power Supply of Optical Subscriber System as established in the Bigfon Trial System'
- ERICSON REVIEW no. 3, 1976, pages 142 - 151; C. BOIJE AF GENNÄS: 'Optimization of Power Supply Equipment for Modern Telecommunication System'

## Description

The present invention concerns power supplies for telephone systems in a telephony system. Where the customer's equipment is connected to the system by conducting cables it is normal practise for the power to be supplied to the customer's equipment along those cables. Modern telephony practise demands that power for telephones should be derived local to the customer rather than being supplied from a telephone exchange, particularly when the transmission medium from the exchange to the vicinity of the customer is either by radio or along optical fibres, or where the conducting cables are too long for the economic transmission of power.

The present invention is concerned with a simple solution to this problem.

There is disclosed in Intelec'85 - conference proceedings October 1985 Munich, Germany at pages 527-531 a telephony system in which a plurality of local network terminations are connected to a street cabinet which in turn is connected to an exchange and in which the street cabinet has a power supply for supplying power to each of the local network terminations.

According to the present invention a telephony system comprises a plurality of groups of local network terminals each group being connected to a respective signal street cabinet which cabinets are connected to an exchange, there being means to supply power and a ringing signal to each network termination, characterised in that each street cabinet has means for supplying power to its respective group of network terminations and means for supplying a master ringing signal to each of its group of network terminations, the power from the street cabinet being distributed at ringing frequency and the power supply comprising a rectifier for rectifying A.C. mains, the D.C. output of the rectifier being connected to switches controlled by an oscillator in order to distribute the power at ringing frequency, and wherein each network termination has a rectifier connected to the power output of the street cabinet to provide power supply for the electronic line termination equipment and a filter (26) for separating out the A.C. component to provide a ringer supply for individual subscribers connected to the local termination.

In order that the invention may be more readily understood, an embodiment thereof will now be described by way of example and with reference to the accompanying drawings, in which:
Figure 1 is a block diagram of a telephony network according to the present invention, and
Figure 2 is a block diagram showing part of the network of Figure 1 in greater detail.

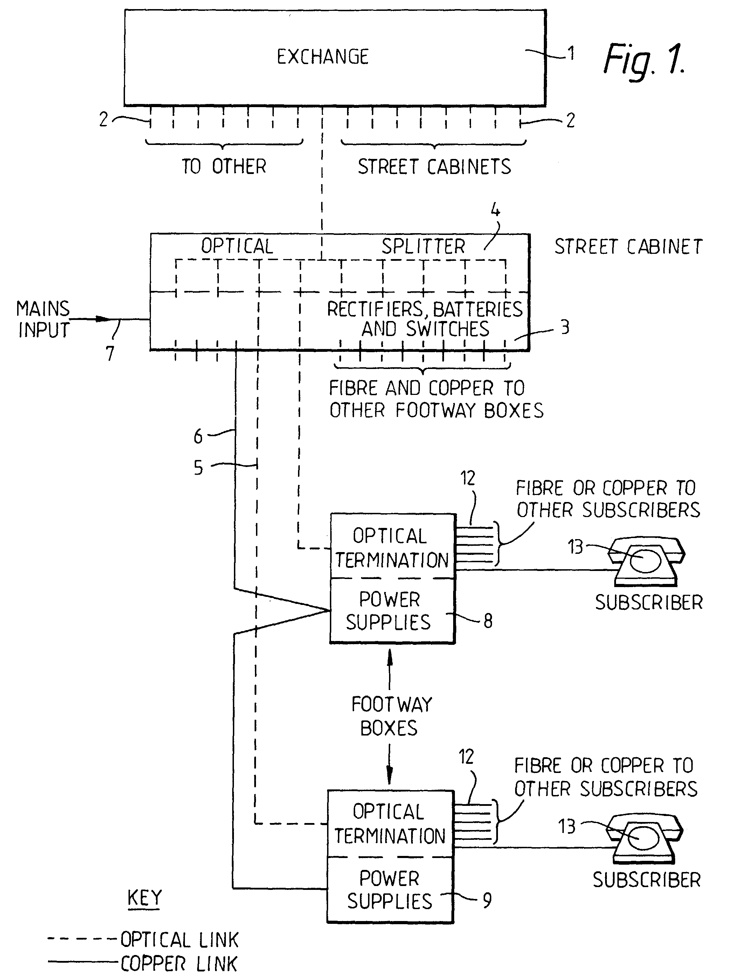

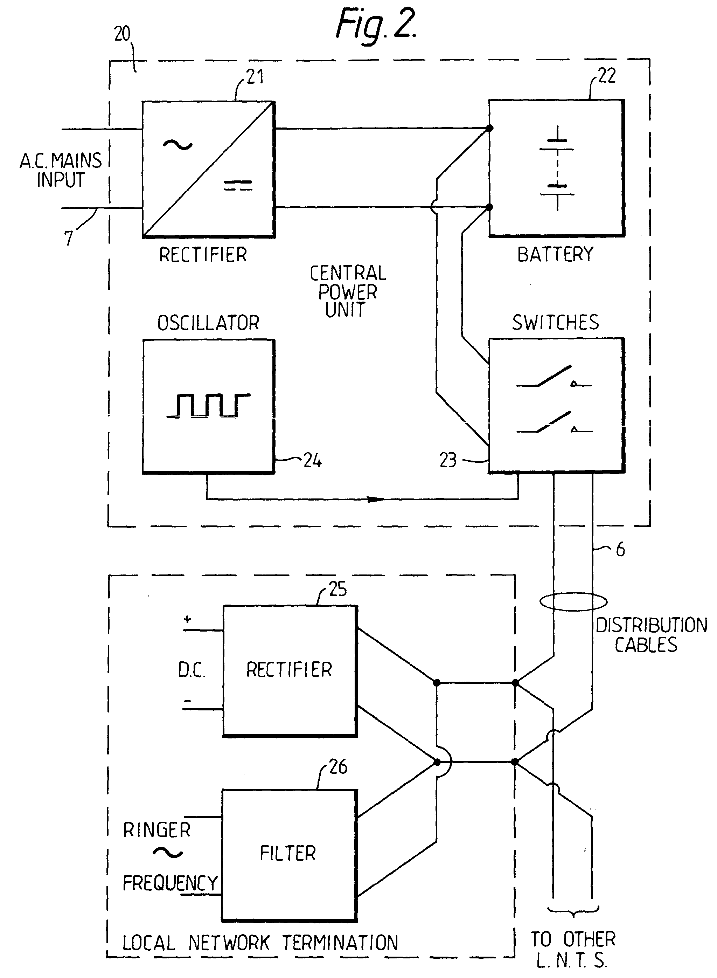

Referring now to Figure 1 of the drawings this shows a telephone exchange 1 having a number of optical output lines 2 leading to street cabinets. Only one street cabinet, given the reference 3, is shown. It will be appreciated that all the other street cabinets will be similar to cabinet 3 which contains an optical splitter indicated at 4 to split the incoming optical signal for transmission on to a plurality of footway boxes via fibre and power cables shown at 5 and 6 respectively. As will be apparent after the description of Figure 2 cabinet 3 also contains circuitry in the form of batteries, rectifiers and switches and is connected at 7 to a mains power supply (which is not shown). Two identical footway boxes 8 and 9 are shown each receiving an individual optical line 5 and a copper link 6 for providing power. Each footway box contains optical terminations generally indicated at 10 and power supplies generally indicated at 11. Each of the footway boxes has up to twenty fibre or copper outputs 12 leading to individual subscribers as shown at 13.

Referring now to Figure 2 of the drawings this shows a central power unit 20 located in the street cabinet 3 of Figure 1. This power unit comprises a rectifier 21 connected to the A.C. mains, which converts the incoming A.C. voltage into a stable D.C. voltage. This D.C. voltage is supplied to the terminals of a battery 22 allowing the system to continue operating during periods of mains supply interruption. The D.C. voltage is also applied to switches 23 controlled by a master oscillator 24 which converts the D.C. to A.C. at the required ringing frequency. This power is supplied along the power distribution cables 6 to the power supplies 11 of the footway boxes. Each of these power supplies includes a rectifier 25 which converts the A.C. to D.C. to provide power supplies for the electronic line termination equipment and a filter 26 to separate out the A.C. to produce a ringer supply for the individual subscribers.

The benefits of the system just described are that there are a reduced number of connections to the main supply, a reduced number of rectifiers and batteries for the D.C. supply, and a reduced number of oscillators for ringing whilst only employing two conductors for distribution.

## Claims

1. A telephony system comprising a plurality of groups of local network terminals (8) each group being connected to a respective single street cabinet (3) which cabinets are connected to an exchange (1), there being means to supply power and a ringing signal to each network termination (8), characterised in that each street cabinet (3) has means (21) for supplying power to its respective group of network terminations (8) and means (24) for supplying a master ringing signal to each of its group of network terminations (8), the power from the street cabinet (3) being distributed at ringing frequency and the power supply comprising a rectifier (21) for rectifying A.C. mains (7), the D.C. output of the rectifier (21) being connected to switches (23) controlled by an oscillator (24) in order to distribute the power at ringing frequency, and wherein each network termination (8) has a rectifier (25) connected to the power output of the street cabinet (3) to provide power supply for the electronic line termination equipment and a filter (26) for separating out the A.C. component to provide a ringer supply for individual subscribers connected to the local termination.

2. A system as claimed in Claim 1 further characterised in that one output of the rectifier (21) is connected to a battery (22) to provide back-up in the event of power failure.

## Patentansprüche

1. Telefoniesystem enthaltend eine Vielzahl Gruppen lokaler Netzabschlüsse (8), wobei jede Gruppe mit einem jeweiligen einzelnen Verteilerschrank (3) verbunden ist, welche Schränke mit einer Vermittlung (1) verbunden sind, und mit Mitteln zur Zufuhr von Versorgungsenergie und eines Rufsignals an jeden Netzabschluß (8),
**dadurch gekennzeichnet,**
daß jeder Verteilerschrank (3) Mittel (21) zur Zufuhr von Versorgungsenergie an seine jeweilige Gruppe Netzabschlüsse (8) und Mittel (24) zur Zufuhr eines Hauptrufsignals an jede seiner Gruppe Netzabschlüsse (8) aufweist, die Versorgungsenergie von dem Verteilerschrank (3) bei einer Ruffrequenz verteilt wird und die Energieversorgung einen Gleichrichter (21) zum Gleichrichten der Wechselstromhauptversorgung (7) aufweist, der Gleichstromausgang des Gleichrichters (21) mit Schaltern (23) verbunden ist, die von einem Oszillator (24) gesteuert werden, um die Versorgungsenergie bei Ruffrequenz zu verteilen, und jeder Netzabschluß (8) einen Gleichrichter (25) hat, der mit dem Versorgungsenergieausgang des Verteilerschranks (3) verbunden ist, um eine Energieversorgung für die elektronische Leitungsabschlußeinrichtung vorzusehen, und ein Filter (26) zum Abtrennen der Wechselstromkomponente hat, um eine Rufgeberversorgung für die einzelnen Teilnehmer vorzusehen, die mit dem lokalen Abschluß verbunden sind.

2. System nach Anspruch 1, ferner
**dadurch gekennzeichnet**,
daß ein Ausgang des Gleichrichters (21) mit einer Batterie (22) verbunden ist, um im Falle eines Versorgungsenergieausfalls eine Reserveversorgung vorzusehen.

## Revendications

1. Réseau téléphonique comprenant plusieurs groupes de terminaux (8) de réseaux locaux, chaque groupe étant connecté à un seul coffret respectif de rue (3), les coffrets étant connectés à un central (1), un dispositif étant destiné à transmettre de l'énergie et un signal de sonnerie à chaque terminaison de réseau (8), caractérisé en ce que chaque coffret de rue (3) comporte un dispositif (21) de transmission d'énergie aux groupes respectifs de terminaisons de réseaux (8), et un dispositif (24) destiné à transmettre un signal principal de sonnerie à chaque terminaison de son groupe de terminaisons de réseaux (8), l'alimentation provenant du coffret de rue (3) étant distribuée à la fréquence de sonnerie et l'alimentation comprenant un redresseur (21) destiné à redresser le courant d'un réseau alternatif (7), le signal continu de sortie du redresseur (21) étant connecté à des commutateurs (23) commandés par un oscillateur (24) afin que de l'énergie soit distribuée à la fréquence de sonnerie, et dans lequel chaque terminaison du réseau (8) possède un redresseur (25) connecté à la sortie d'alimentation du coffret de rue (3) pour la transmission d'énergie à l'équipement électronique de terminaison de ligne et un filtre (26) de séparation de la composante alternative pour la formation d'une alimentation de sonnerie des abonnés individuels connectés à la terminaison locale.

2. Réseau selon la revendication 1, caractérisé en outre en ce qu'une sortie du redresseur (21) est connectée à une batterie d'accumulateurs (22) de secours en cas de panne d'énergie.
